# FASCICULE DE BREVET EUROPEEN

(11) **EP 0 481 871 B1**
(45) Date de publication et mention de la délivrance du brevet: **29.09.1993**
(21) Numéro de dépôt: 91402744.6
(22) Date de dépôt: 15.10.1991
(51) Int. Cl.: F16L 39/00, F28F 9/12

(54) **Bride pour le raccordement des tubulures d'entrée et de sortie d'un évaporateur**
Flansch zum Verbinden von ein- und austretenden Rohren eines Verdampfers
Flange for the connection of the inlet and outlet tubes of an evaporator

(30) Priorité: 17.10.1990 FR 9012834
(43) Date de publication de la demande: 22.04.1992
(73) Titulaire: VALEO THERMIQUE HABITACLE, 78320 Le Mesnil-Saint-Denis (FR)
(72) Inventeur: Martins, Carlos, F-78720 Senlisse (FR)
(74) Mandataire: Gamonal, Didier

(56) Documents cités:
- DE-B- 1 255 417
- US-A- 3 869 153
- US-A- 3 958 418

## Description

L'invention concerne une bride pour le raccordement simultané d'une tubulure d'entrée et d'une tubulure de sortie d'un échangeur de chaleur du type évaporateur à un détendeur dans une installation de climatisation, notamment de véhicule automobile, ainsi qu'une installation de climatisation utilisant une telle bride, voir US-A-3 869 153.

On connaît des installations de climatisation, notamment pour véhicule automobile, dans lesquelles un évaporateur comporte une tubulure d'entrée et une tubulure de sortie raccordées à un détendeur et disposées, dans la région de raccordement, sensiblement horizontalement et sensiblement l'une au-dessus de l'autre, par exemple dans un même plan vertical. Dans ces installations connues, la bride s'appuie sur des bourrelets des tubulures pour comprimer des joints d'étanchéité entre ceux-ci et des surfaces de réception du détendeur, sous l'action de moyens de serrage tels que des vis sollicitant la bride vers le détendeur. La bride a la forme d'une plaque allongée traversée dans son épaisseur par deux encoches débouchant respectivement dans ses extrémités opposées, recevant respectivement les deux tubulures et constituées chacune par une fente à bords parallèles dont la largeur est légèrement supérieure au diamètre de la tubulure correspondante, terminée par un fond semi-circulaire dont le diamètre correspond à la largeur de la fente. Ces encoches sont disposées dos à dos, leurs lignes médianes s'étendant dans le plan contenant les axes des fonds semi-circulaires.

Dans ces installations, le détendeur est un organe fragile qui doit être remplacé relativement fréquemment. Lorsque la bride est désolidarisée du détendeur et libérée par le desserrage des vis, elle a tendance à basculer, en s'appuyant sur la tubulure inférieure, dans le plan défini par les axes des deux tubulures, jusqu'à se trouver entièrement dans l'espace compris entre celles-ci et à pouvoir s'échapper latéralement et tomber. Il est alors difficile de la récupérer au fond du compartiment moteur du véhicule. Cette tendance est d'autant plus grande que le plan des axes des tubulures est plus proche d'une orientation verticale, les frottements entre les tubulures et les bords des encoches étant plus faibles.

Le but de l'invention est de remédier à cet inconvénient et de fournir une bride imperdable, restant en position sur les tubulures lorsqu'elle est désolidarisée du détendeur.

A cet effet, l'invention vise une bride pour le raccordement simultané d'une tubulure d'entrée et d'une tubulure de sortie d'un échangeur de chaleur, notamment un évaporateur, disposées sensiblement horizontalement et sensiblement l'une au-dessus de l'autre, à un détendeur dans une installation de climatisation, notamment de véhicule automobile, propre à s'appuyer sur des bourrelets desdites tubulures pour comprimer des joints d'étanchéité entre ceux-ci et des surfaces de réception du détendeur, sous l'action de moyens de serrage sollicitant la bride vers le détendeur, la bride ayant la forme d'une plaque allongée traversée dans son épaisseur par deux encoches débouchant respectivement dans ses extrémités opposées, propres à recevoir respectivement les deux tubulures, comportant des fonds semi-circulaires adaptés à la circonférence des tubulures, au moins une première desdites encoches formant, entre l'extrémité de la bride et le fond semi-circulaire, une fente à bords parallèles sensiblement tangents à ce dernier, caractérisée en ce que lesdits bords sont inclinés par rapport au plan contenant les axes des fonds semi-circulaires.

Avantageusement, les deux encoches forment des fentes à bords parallèles inclinés par rapport audit plan, les lignes médianes des encoches s'écartant de ce plan des deux côtés opposés de celui-ci respectivement.

De préférence, l'angle d'inclinaison des bords des encoches est compris entre 5 et 45°.

Le maintien de la bride en position est encore amélioré lorsque la profondeur d'au moins la première encoche est sensiblement supérieure au diamètre de la tubulure correspondante.

L'invention a également pour objet une installation de climatisation, notamment pour véhicule automobile, comprenant un évaporateur muni d'une tubulure d'entrée et d'une tubulure de sortie disposées sensiblement horizontalement et sensiblement l'une au-dessus de l'autre, raccordées à un détenteur au moyen d'une bride qui s'appuie sur des bourrelets desdites tubulures pour comprimer des joints d'étanchéité entre ceux-ci et des surfaces de réception du détendeur, sous l'action de moyens de serrage sollicitant la bride vers le détendeur, la bride ayant la forme d'une plaque allongée traversée dans son épaisseur par deux encoches débouchant respectivement dans ses extrémités opposées, recevant respectivement les deux tubulures et comportant des fonds semi-circulaires adaptés à la circonférence des tubulures, au moins une première desdites encoches formant, entre l'extrémité de la bride et le fond semi-circulaire, une fente à bords parallèles sensiblement tangents à ce dernier, caractérisée en ce que la bride est telle que définie ci-dessus.

D'autres caractéristiques et avantages de l'invention ressortiront de la description détaillée donnée ci-après d'un exemple de réalisation, et des dessins annexés dans lesquels :
- la figure 1 est une vue partielle en perspective d'une installation de climatisation selon l'invention, montrant l'évaporateur avec ses tubulures d'entrée et de sortie, le détendeur et la bride selon l'invention ;
- la figure 2 est une vue de face de la bride ; et
- la figure 3 est une vue de la bride en coupe selon la ligne III-III de la figure 2, montrant également les parties d'extrémité des tubulures d'entrée et de sortie ainsi qu'une partie du détendeur.

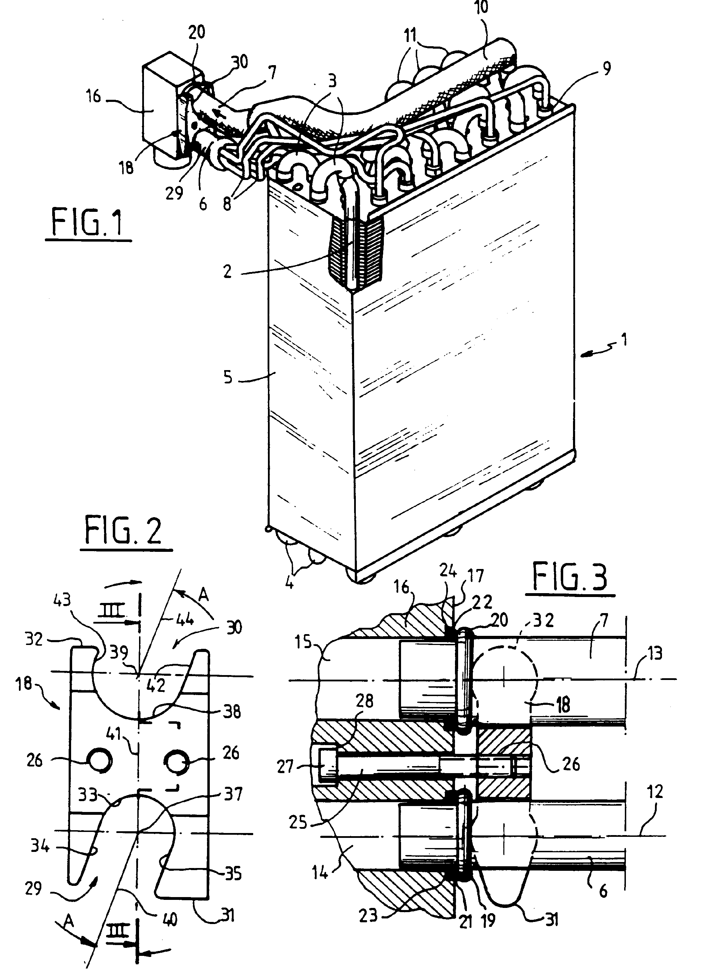

L'évaporateur 1, illustré à la figure 1, appartenant à une installation de climatisation de véhicule automobile, comprend une multiplicité de tubes d'échange de chaleur composés chacun de plusieurs sections tubulaires rectilignes 2, s'étendant verticalement, reliées entre elles en série par des sections tubulaires en U 3 reliant chacune les extrémités supérieures de deux sections rectilignes et par des sections tubulaires en U 4 reliant chacune les extrémités inférieures de deux sections rectilignes. Les sections rectilignes 2 traversent une multiplicité d'ailettes 5 sous forme de plaques disposées horizontalement les unes au-dessus des autres. Une tubulure d'entrée 6 et une tubulure de sortie 7 sont prévues pour un fluide réfrigérant circulant dans l'évaporateur 1. La tubulure d'entrée 6 se subdivise en tubulures élémentaires 8 raccordées chacune à l'extrémité d'entrée 9 de l'un des tubes d'échange de chaleur 2, 3, 4. La tubulure de sortie 7 est le prolongement d'un collecteur 10 raccordé par l'intermédiaire de tubulures élémentaires 11 aux extrémités de sortie des tubes d'échange de chaleur 2, 3, 4. Les extrémités d'entrée et de sortie des tubes d'échange de chaleur, les tubulures élémentaires 11 et le collecteur 10 sont situés au-dessus de l'empilement d'ailettes 5.

Les axes 12 et 13 des tubulures d'entrée et de sortie 6 et 7 (figure 3) sont orientés sensiblement horizontalement et disposés sensiblement dans un même plan vertical, la tubulure 7 étant au-dessus de la tubulure 6. Les extrémités libres des tubulures 6 et 7 sont engagées dans des orifices respectifs 14 et 15 d'un détendeur 16, débouchant dans une face verticale 17 de celui-ci. Pour le raccordement étanche des tubulures aux orifices 14 et 15, une bride 18 s'appuie sur des bourrelets annulaires 19 et 20 formés respectivement sur les tubulures 6 et 7, ces bourrelets comprimant des joints toriques d'étanchéité 21 et 22 dans des logements annulaires 23 et 24, formés par des élargissements les orifices 14 et 15, adjacents à la face 17. L'appui de la bride 18 sur les bourrelets est assuré par des vis 25 se vissant dans des trous filetés 26 qui traversent l'épaisseur de la bride et dont la tête 27 s'appuie sur des surfaces 28 du détendeur tournées à l'opposé de la bride.

La bride 18 a la forme d'une plaque allongée traversée dans son épaisseur par deux encoches 29 et 30 débouchant dans les extrémités opposées 31 et 32 de la bride et recevant les tubulures 6 et 7, respectivement. Chaque encoche 29, 30, considérée dans le plan général de la bride, comme vu à la figure 2, comporte un fond semi-circulaire 33, 38 d'axe 37, 39, adapté à la circonférence de la tubulure 6, 7, c'est-à-dire entourant la moitié de cette circonférence avec un jeu juste suffisant pour permettre son introduction. Entre son fond 33 et l'extrémité 31, l'encoche 29 forme une fente à bords rectilignes parallèles 34 et 35, sensiblement tangents au fond circulaire 33. Les bords parallèles 34 et 35 et, par conséquent, la ligne médiane 40 de l'encoche 29, qui est équidistante de ceux-ci, sont inclinés par rapport au plan 41 contenant les axes 37 et 39 des fonds semi-circulaires. L'angle d'inclinaison A est de 20°. L'encoche 30 présente, entre une extrémité de son fond semi-circulaire 38 et l'extrémité 32 de la bride, un bord rectiligne 42. A l'opposé du bord 42, le fond semi-circulaire 38 se termine très près de l'extrémité 32 de la bride et est raccordé à celle-ci par une amorce de bord rectiligne 43 sensiblement parallèle au bord 42. Les bords 42 et 43 et la ligne médiane 44 de l'encoche 30 sont inclinés par rapport au plan 41 de l'angle A précité. La ligne médiane 40 située entre les bords 34 et 35 de l'encoche 29 s'écarte du plan 41 vers la gauche de la figure 2, en allant vers le bas à partir de l'axe 37. La ligne médiane 44, située entre les bords 42 et 43 de l'encoche 30, s'écarte vers la droite du plan 41 en allant vers le haut à partir de l'axe 39. Les bords 34, 35, 42 et 43 et les lignes médianes 40 et 44 sont donc tous parallèles entre eux. Par ailleurs, la profondeur de l'encoche 29 à partir de l'extrémité 31 de la bride est sensiblement supérieure, d'environ 50%, au diamètre de la tubulure 6.

Pour démonter le détendeur 16, il faut dévisser les vis 25, libérant ainsi la bride 18. Celle-ci a tendance à basculer, sous l'effet de son propre poids, dans le plan des axes 12 et 13 des tubulures 6 et 7 qui coïncide avec le plan 41. Mais l'inclinaison des encoches 29 et 30 ne permet pas un tel mouvement qui amènerait l'amorce de bord 43 et surtout le bord 35 en butée sur les tubulures 7 et 6, respectivement. La bride reste donc en place, disponible pour être liée à un nouveau détendeur. Néanmoins, cette disposition ne gêne pas la mise en place de la bride lors du montage d'origine ou son extraction éventuelle car il suffit pour cela d'écarter momentanément les tubulures 6 et 7 l'une de l'autre en faisant jouer leur élasticité.

Dans le mode de réalisation décrit ci-dessus, les bords parallèles des deux encoches sont inclinés par rapport au plan des axes des fonds semi-circulaires de façon que les lignes médianes des encoches s'écartent de ce plan des deux côtés opposés de celui-ci respectivement. Selon une variante, les bords parallèles sont inclinés de façon que les lignes médianes des encoches s'écartent de ce même plan du même côté de celui-ci. Dans ce cas les bords des encoches respectives sont inclinés les uns par rapport aux autres d'un angle égal à la somme des angles d'inclinaison des bords de chaque encoche par rapport au plan des axes.

Selon une modification, une seule des encoches de la bride peut comporter des bords inclinés. Alternativement, les deux encoches peuvent présenter des bords inclinés selon des angles différents. Il n'est pas nécessaire, dans tous les cas, que la profondeur d'une encoche soit sensiblement supérieure au diamètre de la tubulure correspondante. En revanche, il est possible de prévoir cette caractéristique pour les deux encoches.

## Revendications

1. Bride (18) pour le raccordement simultané d'une tubulure d'entrée (6) et d'une tubulure de sortie (7) d'un évaporateur (1), disposées sensiblement horizontalement et sensiblement l'une au-dessus de l'autre, à un détendeur (16) dans une installation de climatisation, notamment de véhicule automobile, propre à s'appuyer sur des bourrelets (19,20) desdites tubulures pour comprimer des joints d'étanchéité (21,22) entre ceux-ci et des surfaces de réception (23,24) du détendeur, sous l'action de moyens de serrage (25) sollicitant la bride vers le détendeur, la bride ayant la forme d'une plaque allongée traversée dans son épaisseur par deux encoches (29,30) débouchant respectivement dans ses extrémités opposées (31,32), propres à recevoir respectivement les deux tubulures (6,7), comportant des fonds semi-circulaires (33,38) adaptés à la circonférence des tubulures, au moins une première (29) desdites encoches formant, entre l'extrémité de la bride et le fond semi-circulaire, une fente à bords parallèles (34,35) sensiblement tangents à ce dernier, caractérisée en ce que lesdits bords sont inclinés par rapport au plan (41) contenant les axes (37,39) des fonds semi-circulaires.

2. Bride selon la revendication 1, caractérisée en ce que les deux encoches forment des fentes à bords parallèles inclinés par rapport audit plan, les lignes médianes (40,44) des encoches s'écartant de ce plan des deux côtés opposés de celui-ci respectivement.

3. Bride selon la revendication 1, caractérisée en ce que les deux encoches forment des fentes à bords parallèles inclinés par rapport audit plan, les lignes médianes des encoches s'écartant de ce plan du même côté de celui-ci.

4. Bride selon l'une des revendications précédentes, caractérisée en ce que l'angle d'inclinaison (A) desdits bords est compris entre 5 et 45°.

5. Bride selon l'une des revendications précédentes, caractérisée en ce que la profondeur d'au moins ladite première encoche (29) est sensiblement supérieure au diamètre de la tubulure correspondante.

6. Installation de climatisation, notamment pour véhicule automobile, comprenant un évaporateur (1) muni d'une tubulure d'entrée (6) et d'une tubulure de sortie (7) disposées sensiblement horizontalement et sensiblement l'une au-dessus de l'autre, raccordées à un détendeur (16) au moyen d'une bride (18) qui s'appuie sur des bourrelets (19,20) desdites tubulures pour comprimer des joints d'étanchéité (21,22) entre ceux-ci et des surfaces de réception (23,24) du détendeur, sous l'action de moyens de serrage (25) sollicitant la bride vers le détendeur, la bride ayant la forme d'une plaque allongée traversée dans son épaisseur par deux encoches (29,30) débouchant respectivement dans ses extrémités opposées (31,32), recevant respectivement les deux tubulures (6,7) et comportant des fonds semi-circulaires (33,38) adaptés à la circonférence des tubulures, au moins une première (29) desdites encoches formant, entre l'extrémité de la bride et le fond semi-circulaire, une fente à bords parallèles (34,35) sensiblement tangents à ce dernier, caractérisée en ce que la bride est telle que définie dans l'une des revendications précédentes.

## Patentansprüche

1. Flansch (18) zum gleichzeitigen Verbinden eines eintretenden Rohrs (6) und eines austretenden Rohrs (7) eines Verdampfers, angeordnet im wesentlichen horizontal und im wesentlichen übereinander, mit einem Druckminderventil (16) in einer Klimaanlage, insbesondere eines Kraftfahrzeugs, geeignet zur Auflage auf Wulsten (19, 20) der genannten Rohre, um Dichtungsringe (21, 22) zwischen diesen und Aufnahmeflächen (23, 24) des Druckminderventils unter Einwirkung von Einspannmitteln (25) zusammenzudrücken, die den Flansch zum Druckminderventil hin beanspruchen, wobei der Flansch die Form einer länglichen Platte hat, durch deren Dicke zwei Einschnitte (29, 30) hindurch verlaufen, die jeweils in den gegenüberliegenden Enden (31, 32) münden und zur jeweiligen Aufnahme der zwei Rohre (6, 7) geeignet sind, mit halbkreisförmigen Böden (33, 38), die an den Kreisumfang der Rohre angepaßt sind, wobei wenigstens ein erster (29) der genannten Einschnitte zwischen dem Ende des Flanschs und dem halbkreisförmigen Boden einen Schlitz mit parallel und im wesentlichen tangential dazu verlaufenden Kanten (34, 35) bildet, **dadurch** **gekennzeichnet**, daß die genannten Kanten im Verhältnis zu der Ebene (41), die die Achsen (37, 39) der halbkreisförmigen Böden enthält, geneigt sind.

2. Flansch nach Anspruch 1, **dadurch gekennzeichnet,** daß die beiden Einschnitte Schlitze mit parallel verlaufenden, im Verhältnis zu der genannten Ebene geneigten Kanten bilden, wobei sich die Mittellinien (40, 44) der Einschnitte auf den beiden gegenüberliegenden Seiten derselben von dieser Ebene entfernen.

3. Flansch nach Anspruch 1, **dadurch gekennzeichnet,** daß die beiden Einschnitte Schlitze mit parallel verlaufenden, im Verhältnis zu der genannten Ebene geneigten Kanten bilden, wobei sich die Mittellinien (40, 44) der Einschnitte von der Ebene auf dessen Seite entfernen.

4. Flansch nach einem der vorherigen Ansprüche, **dadurch gekennzeichnet,** daß der Neigungswinkel (A) der genannten Kanten zwischen 5 und 45° liegt.

5. Flansch nach einem der vorherigen Ansprüche, **dadurch gekennzeichnet**, daß die Tiefe wenigstens des ersten Einschnitts (29) im wesentlichen größer ist als der Durchmesser des entsprechenden Rohrs.

6. Klimaanlage, insbesondere für ein Kraftfahrzeug, enthaltend einen Verdampfer (1), versehen mit einem eintretenden Rohr (6) und einem austretenden Rohr (7), die im wesentlichen horizontal und im wesentlichen übereinander angeordnet sind, verbunden mit einem Druckminderventil (16) über einen Flansch (18), der auf Wulsten (19, 20) der genannten Rohre aufliegt, um zwischen diesen und Aufnahmeflächen (23, 24) des Druckminderventils Dichtungsringe (21, 22) unter Einwirkung von Einspannmitteln (25)zusammenzudrücken, die den Flansch zum Druckminderventil hin beanspruchen, wobei der Flansch die Form einer länglichen Platte hat, durch deren Dicke zwei Einschnitte (29, 30) hindurch verlaufen, die jeweils in den gegenüberliegenden Enden (31, 32)einmünden und zur Aufnahme der beiden Rohre (6, 7) dienen und halbkreisförmige Böden (33, 38) aufweisen, die an den Kreisumfang der Rohre angepaßt sind, wobei wenigstens ein erster (29) der genannten Einschnitte zwischen dem Ende des Flanschs und dem halbkreisförmigen Boden einen Schlitz mit parallel und im wesentlichen tangential dazu verlaufenden Kanten (34, 35) bildet, **dadurch gekennzeichnet,** daß der Flansch so beschaffen ist, wie in einem der vorherigen Ansprüche definiert.

## Claims

1. An anchor plate (18) for the simultaneous fastening of an inlet branch (6) and an outlet branch (7) of an evaporator (1), which are disposed substantially horizontally and with one substantially above the other, to an expansion chamber (16) in an air conditioning installation, especially for a motor vehicle, the expansion chamber being arranged to abut against beads (19, 20) of the said branches so as to compress sealing elements (21, 22) between the latter and receiving surfaces (23, 24) of the expansion chamber, under the action of tightening means (25) urging the anchor plate towards the expansion chamber, the anchor plate having the form of an elongated plate through the thickness of which there extend two slots (29, 30) which are open respectively in its opposed ends (31, 32), and which are adapted to receive the two branches (6, 7) respectively, the slots having semi-circular base portions (33, 38) matching the circumference of the branches, with at least a first one of the said slots (29) defining, between the end of the anchor plate and the semi-circular base portion, an aperture having parallel edges (34, 35) which are substantially tangential to the latter, characterised in that the said edges are inclined with respect to the plane (41) which contains the axes (37, 39) of the semi-circular base portions.

2. An anchor plate according to Claim 1, characterised in that both of the slots define apertures having parallel edges which are inclined with respect to the said plane, the mean lines (40, 44) of the slots being divergent from this plane on the two respective opposed sides of the latter.

3. An anchor plate according to Claim 1, characterised in that both of the slots define apertures having parallel edges which are inclined with respect to the said plane, with the median lines of the slots diverging from the said plane on the same side of the latter.

4. An anchor plate according to one of the preceding Claims, characterised in that the angle of inclination (A) of the said edges lies between 5 and 45 degrees.

5. An anchor plate according to one of the preceding Claims, characterised in that the depth of at least the said first slot (29) is substantially greater than the diameter of the corresponding branch.

6. An air conditioning installation, especially for a motor vehicle, comprising an evaporator (1) having an inlet branch (6) and an outlet branch (7) which are disposed substantially horizontally and substantially one above the other, and which are fastened to an expansion chamber (16) by means of an anchor plate (18), which abuts against beads (19, 20) of the branches so as to compress sealing elements (21, 22) between the latter and receiving surfaces (23, 24) of the expansion chamber, under the action of tightening means (25) urging the anchor plate towards the expansion chamber, the anchor plate being in the form of an elongated plate through the thickness of which there extend two slots (29, 30) which are open respectively in its opposite ends (31, 32), with the slots receiving the two respective branches (6, 7) and including semi-circular base portions (33, 38) which match the circumference of the branches, with at least a first one of the said slots (29) defining, between the end of the anchor plate and the semi-circular base portion, an aperture having parallel edges (34, 35) which are substantially tangential to the latter, characterised in that the anchor plate is as defined in one of the preceding Claims.
